# FASCICULE DE BREVET EUROPEEN

(11) **EP 1 280 368 B1**
(45) Date de publication et mention de la délivrance du brevet: **01.07.2009**
(21) Numéro de dépôt: 02291865.0
(22) Date de dépôt: 24.07.2002
(51) Int. Cl.: H04W 88/02, H04W 12/06

(54) **Procédé de sécurisation d'échanges entre un terminal informatique et un équipement distant, ainsi que terminal et serveur correspondants**
Verfahren zur Sicherung des Austausches zwischen einem Informationsgerät und einer entfernten Einrichtung, sowie entsprechendes Gerät und Server& x9;
Method for secure exchange between an informatic terminal and a distant equipment, as well as corrresponding terminal and server

(30) Priorité: 24.07.2001 FR 0109911
(43) Date de publication de la demande: 29.01.2003
(73) Titulaire: Bouygues Telecom, 92100 Boulogne Billancourt (FR)
(72) Inventeur: Plagne, Sylvain, 92100 Boulogne Billancourt (FR)
(74) Mandataire: Texier, Christian

(56) Documents cités:
- EP-A- 0 996 300
- EP-A- 1 094 682

## Description

La présente invention est relative à la sécurisation d'échanges à distance entre équipements informatiques.

### DOMAINE TECHNIQUE GENERAL ET ETAT DE LA TECHNIQUE

On connaît de nombreuses techniques d'authentification ou de chiffrement.

Ces techniques peuvent être de type purement logiciel (utilisation d'un mot de passe, d'une clé de chiffrement, calcul de signature électronique, etc.). Elles peuvent également nécessiter des modules matériels spécifiques (transpondeurs ou cartes à puce mémorisant des codes d'authentification, des clés de chiffrement ou tout ou partie d'un logiciel de cryptage ou d'authentification, etc.).

Les solutions de sécurisation d'échanges à distance qui utilisent de tels modules physiques sont réputées plus sûres. Cependant, elles sont peu pratiques, puisqu'elles ne peuvent être mises en oeuvre sans ce matériel spécifique.

L'invention propose quant à elle une technique de sécurisation qui exploite les fonctionnalités d'un téléphone mobile à des fins d'authentification et de chiffrement d'échanges à distance entre équipements informatiques.

Il a déjà été proposé dans la demande de brevet EP1.094.682 une technique de sécurisation d'échanges à distance dans laquelle pour connecter un ordinateur à un "intranet" distant, on utilise un téléphone mobile qui se connecte à un serveur permettant l'accès à cet "intranet", ce téléphone mobile étant utilisé comme passerelle de sécurisation entre ledit serveur et l'ordinateur que l'on veut connecter.

A cet effet, le téléphone mobile comporte des moyens spécifiques lui permettant de mettre en oeuvre un micro - programme par lequel ledit téléphone mobile échange avec une autre passerelle de sécurisation qui quant à elle se trouve au niveau du serveur intranet.

Cette technique de sécurisation présente toutefois l'inconvénient majeur de n'être utilisable que lorsque le téléphone mobile est dans une zone de couverture d'un réseau de communication cellulaire avec lequel il est susceptible de coopérer.

### PRESENTATION DE L'INVENTION

L'invention propose quant à elle une solution qui ne présente pas cet inconvénient.

Elle propose en particulier un procédé de sécurisation d'échanges entre un terminal informatique et un équipement distant, le terminal étant dépourvu de fonction de téléphonie mobile ou s'il en est pourvu, étant apte à se connecter à l'équipement distant en l'absence de couverture par un réseau de communication cellulaire, caractérisé en ce que pour connecter le terminal informatique à l'équipement distant, on met en oeuvre les étapes suivantes :
- le terminal informatique transmet un identifiant à l'équipement distant,
- l'équipement distant lui transmet en réponse une requête d'authentification,
- le terminal informatique transmet cette requête au module d'identification d'un téléphone portable auquel ledit terminal est connecté,
- le module d'identification de téléphone portable met en oeuvre sur cette requête un algorithme d'authentification et renvoie au terminal informatique une réponse qui est le résultat du traitement de cette requête par l'algorithme d'authentification,
- le terminal informatique transmet cette réponse à l'équipement distant,
- l'équipement distant compare la réponse à un résultat attendu et poursuit la connexion si la réponse et le résultat attendu coïncident.

Notamment, l'équipement distant peut recevoir d'un centre d'authentification d'un réseau de téléphonie cellulaire, pour au moins un module d'identification de téléphone portable donné, d'une part au moins un nombre aléatoire destiné à être transmis dans une requête lorsque l'équipement distant reçoit un identifiant qui correspond à ce module d'identification et d'autre part une réponse attendue qui correspond au résultat du traitement de ce nombre aléatoire par un algorithme d'authentification qui doit être mis en oeuvre par ledit module d'identification.

Avantageusement également, le module d'identification du téléphone transmet au terminal informatique, en même temps que la réponse, une clé secrète de session destinée à être utilisée pour crypter les échanges entre ledit terminal informatique et l'équipement distant.

En particulier, le centre d'authentification transmet à l'équipement distant , en même temps que le nombre aléatoire et la réponse attendue, une clé secrète de session destinée à être utilisée pour crypter les échanges entre ledit terminal informatique et l'équipement distant.

L'invention concerne également un terminal destiné à échanger avec un équipement distant, le terminal étant dépourvu de fonction de téléphonie mobile ou s'il en est pourvu, étant apte à se connecter à l'équipement distant en l'absence de couverture par un réseau de communication cellulaire, caractérisé en ce qu'il comporte des moyens aptes à échanger d'une part avec le module d'identification d'un téléphone portable auquel ledit terminal est connecté et d'autre part avec tel équipement distant, ainsi que des moyens de traitement qui gèrent ces différents échanges en mettant en oeuvre le procédé selon l'une des revendications précédentes.

Avantageusement en outre, les moyens d'échange avec un module d'identification de téléphone comportent des moyens pour transmettre la requête audit module sous la forme d'une commande d'un protocole d'échanges avec un modem.

L'invention propose en outre un serveur informatique tel que défini par la revendication 7.

Elle propose également un ensemble caractérisé en ce qu'il comporte un tel serveur informatique et une passerelle permettant la connexion de celui-ci avec un centre d'authentification d'un réseau de téléphonie cellulaire.

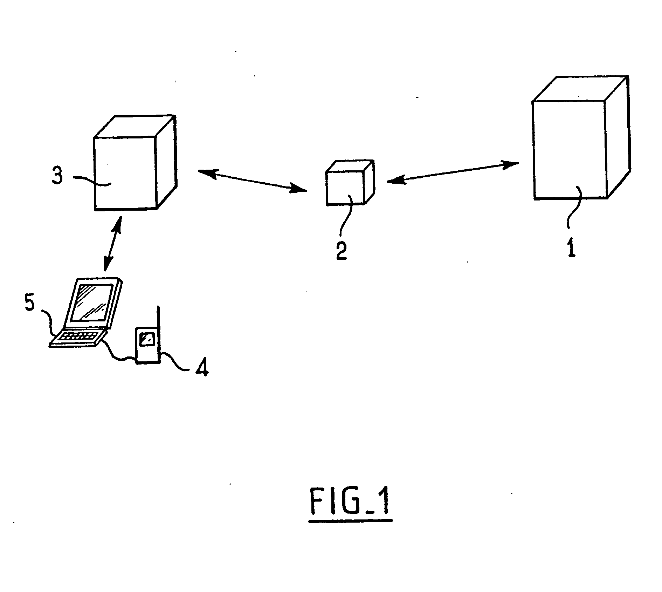

D'autres caractéristiques et avantages de l'invention ressortiront encore de la description qui suit, laquelle est purement illustrative et non limitative et doit être lue en regard de la figure unique annexée sur laquelle la figure 1 illustre schématiquement un système pour la mise en oeuvre de l'invention.

### DESCRIPTION D'UN OU PLUSIEURS MODES DE REALISATION ET DE MISE EN OEUVRE

### Rappels sur les centres d'authentification des réseaux de communications cellulaires

On a représenté sur la figure 1 un centre d'authentification 1 d'un réseau de communication cellulaire, lequel est par exemple de type GSM ou GPRS ou autre.

Classiquement, un tel centre d'authentification (également appelé AUC) est une base de données qui mémorise toutes les informations nécessaires à la protection des communications des abonnés du réseau et qui assure, parmi d'autres fonctions, l'authentification des abonnés.

Cette authentification est généralement mise en oeuvre de la façon suivante : le centre d'authentification demande à un téléphone mobile qui doit être authentifié de lui fournir le résultat d'un calcul effectué à l'aide d'une part sur un nombre aléatoire qu'il lui transmet et d'autre part d'une clé personnelle inscrite dans le module d'identification d'abonné (carte SIM) du téléphone avec l'algorithme de calcul ; le résultat qui est obtenu est comparé avec une valeur attendue.

### Exemple d'architecture et fonctionnement

On a représenté sur la figure 1 un téléphone mobile 4, un terminal informatique 5 connecté audit téléphone mobile 4, ainsi qu'un serveur 3 qui peut être interrogé par le terminal informatique 5 et qui est relié au centre d'authentification 1 par l'intermédiaire d'une passerelle d'interconnexion 2.

Le terminal 5 peut être aussi bien un terminal de PC classique qu'un assistant personnel digital (PDA selon la terminologie anglo-saxonne généralement utilisée).

Le téléphone mobile 4 et ce terminal 5 sont en l'occurrence représentés de façon séparée, mais peuvent également être constitués par un seul et même élément (cas d'un terminal de type PDA ayant également une fonction de téléphonie mobile, par exemple).

Le terme téléphone mobile doit être ici et dans tout le présent texte compris au sens large et renvoie de façon générale à tout terminal ayant une fonction de téléphonie hertzienne.

Le serveur 3 permet par exemple à un utilisateur d'avoir accès à un réseau informatique privé distant.

Il reçoit du centre d'authentification 1 des triplets de sécurité composés pour chaque utilisateur d'un nombre aléatoire d'interrogation RAND, d'une réponse attendue SRES et éventuellement d'une clé secrète de session Kc.

Lorsque l'utilisateur se connecte au serveur 3 à partir de son terminal 5, ledit terminal 5 envoie audit serveur 3 un identifiant utilisateur.

En réponse, le serveur 3 renvoie au terminal 5 le nombre aléatoire RAND.

Une application de connexion dont dispose le terminal 5 redirige ce nombre aléatoire RAND vers la carte SIM du téléphone mobile 4.

A cet effet, le terminal 5 communique avec la carte SIM du téléphone mobile 4 en utilisant un protocole du type de ceux classiquement utilisés (commande AT standardisée par exemple).

En retour la carte SIM du téléphone 1 renvoie au terminal 5 la réponse SRES qu'elle calcule.

Dans un mode de mise en oeuvre avantageux, elle peut également renvoyer à celui-ci la clé secrète de chiffrement Kc, laquelle est utilisée par le terminal 5 pour chiffrer les échanges avec le serveur 3.

La réponse SRES renvoyée au terminal 5 est redirigée par celui-ci vers le serveur distant (3), le cas échéant après avoir été cryptée à l'aide de la clé Kc ainsi fournie audit terminal.

Le serveur 3 - après le cas échéant avoir décrypté la réponse qu'il reçoit à l'aide de la clé qui quant à elle lui a été fournie par le centre d'authentification 1 - compare le résultat transmis par le terminal 5 avec le résultat SRES attendu (également fourni par le centre d'authentification 1).

Si ce résultat correspond effectivement au résultat attendu, l'utilisateur est correctement authentifié et la connexion par le serveur 3 peut se poursuivre.

On notera que le nombre aléatoire RAND, le résultat SRES et la clé Kc peuvent être transmis au serveur distant 3 par le centre d'authentification 1 soit préalablement à la tentative de connexion (en anticipation), soit au moment où l'utilisateur cherche à se connecter, sur requête du serveur distant 3.

Comme on l'aura compris, un tel fonctionnement permet une authentification à partir de la carte SIM qui constitue le module d'identification d'abonné d'un téléphone cellulaire, et ce même lorsque l'utilisateur se trouve dans des zones qui ne sont pas couvertes par les réseaux cellulaires avec lesquels son téléphone portable et sa carte SIM sont susceptibles de fonctionner.

On notera à cet égard que la connexion entre le terminal 5 et le serveur 3 peut être mise en oeuvre via le téléphone mobile 4 si celui-ci se trouve dans une zone de couverture, ou via d'autres liaisons téléinformatiques (réseau téléphonique, réseau local d'entreprise, etc.).

### Exemples d'autres variantes de réalisation et de mises en oeuvre

D'autres variantes de réalisation que celle qui vient d'être décrite sont bien entendu possibles.

Notamment, dans l'exemple qui vient d'être décrit, l'algorithme d'authentification utilisé au niveau de la carte SIM comme au niveau du serveur distant est celui qui est mis en oeuvre au niveau du centre 1 (algorithme A3/A8 de la norme GSM par exemple).

Il peut bien entendu être envisagé que la carte SIM, comme le serveur distant 3 utilisent des algorithmes d'authentification indépendants de ceux qui sont utilisés pour authentifier les abonnés du réseau de télécommunication cellulaire, le serveur distant 3 pouvant dans cette hypothèse mettre en oeuvre par lui-même les calculs d'authentification sans avoir à être relié au centre d'authentification 1.

## Revendications

1. Procédé de sécurisation d'échanges entre un terminal informatique (5) et un équipement distant (3), le terminal étant dépourvu de fonction de téléphonie mobile ou s'il en est pourvu, étant apte à se connecter à l'équipement distant (3) en l'absence de couverture par un réseau de communication cellulaire, **caractérisé en ce que** pour connecter le terminal informatique (5) à l'équipement distant (3), on met en oeuvre les étapes suivantes :
- le terminal informatique (5) transmet un identifiant à l'équipement distant (3),
- l'équipement distant (3) lui transmet en réponse une requête d'authentification,
- le terminal informatique (5) transmet cette requête au module d'identification d'un téléphone portable (4) auquel ledit terminal est connecté,
- le module d'identification de téléphone portable (4) met en oeuvre sur cette requête un algorithme d'authentification et renvoie au terminal informatique (5) une réponse qui est le résultat du traitement de cette requête par l'algorithme d'authentification,
- le terminal informatique (5) transmet cette réponse à l'équipement distant (3),
- l'équipement distant (3) compare la réponse à un résultat attendu et poursuit la connexion si la réponse et le résultat attendu coïncident.

2. Procédé selon la revendication 1, **caractérisé en ce que** l'équipement distant (3) reçoit d'un centre d'authentification d'un réseau de téléphonie cellulaire, pour au moins un module d'identification de téléphone portable (4) donné, d'une part au moins un nombre aléatoire destiné à être transmis dans une requête lorsque l'équipement distant (3) reçoit un identifiant qui correspond à ce module d'identification et d'autre part une réponse attendu qui correspond au résultat du traitement de ce nombre aléatoire par un algorithme d'authentification qui doit être mis en oeuvre par ledit module d'identification.

3. Procédé selon l'une des revendications précédentes, **caractérisé en ce que** le module d'identification du téléphone (4) transmet au terminal informatique (5), en même temps que la réponse, une clé secrète de session destinée à être utilisée pour crypter les échanges entre ledit terminal informatique (5) et l'équipement distant (3).

4. Procédé selon les revendications 2 et 3 prises en combinaison, **caractérisé en ce que** le centre d'authentification transmet à l'équipement distant (3), en même temps que le nombre aléatoire et la réponse attendue, une clé secrète de session destinée à être utilisée pour crypter les échanges entre ledit terminal informatique (5) et l'équipement distant (3).

5. Terminal (5) destiné à échanger avec un équipement distant (3), le terminal (5) étant dépourvu de fonction de téléphonie mobile ou s'il en est pourvu, étant apte à se connecter à l'équipement distant (3) en l'absence de couverture par un réseau de communication cellulaire, **caractérisé en ce qu'**il comporte des moyens aptes à échanger d'une part avec le module d'identification d'un téléphone portable (4) auquel ledit terminal (5) est connecté et d'autre part avec tel équipement distant (3), ainsi que des moyens de traitement qui gèrent ces différents échanges en mettant en oeuvre le procédé selon l'une des revendications précédentes.

6. Terminal (5) selon la revendication 5, **caractérisé en ce que** les moyens d'échange avec un module d'identification de téléphone (4) comportent des moyens pour transmettre la requête audit module sous la forme d'une commande d'un protocole d'échanges avec un modem.

7. Serveur informatique (3) apte à échanger à distance avec un terminal informatique (5) dont dispose un utilisateur, le terminal (5) étant dépourvu de fonction de téléphonie mobile ou s'il en est pourvu, étant apte à se connecter au serveur (3) en l'absence de couverture par un réseau de communication cellulaire, **caractérisé en ce que** pour la mise en oeuvre de la connexion du terminal informatique (5) au serveur (3) ledit serveur comprend
- des moyens pour recevoir un identifiant issu du terminal informatique (5) ;
- des moyens pour transmettre au terminal informatique (5) une requête d'authentification en réponse à l'identifiant reçu, ledit terminal informatique (5) transmettant cette requête au module d'identification d'un téléphone portable (4) auquel ledit terminal (5) est connecté, le module d'identification du téléphone portable (4) mettant en oeuvre sur cette requête un algorithme d'authentification et renvoyant au terminal informatique (5) une réponse qui est le résultat du traitement de cette requête par l'algorithme d'authentification ;
- des moyens pour recevoir la réponse, qui est le résultat du traitement de la requête par l'algorithme d'authentification, issue du terminal informatique (5) ;
- des moyens pour comparer la réponse reçue à un résultat attendu.

8. Ensemble **caractérisé en ce qu'**il comporte un serveur informatique (3) selon la revendication 7 et une passerelle permettant la connexion de celui-ci avec un centre d'authentification (1) d'un réseau de téléphonie cellulaire.

## Claims

1. A method for securing exchanges between a computer terminal (5) and a remote equipment (3), with the terminal lacking a mobile phone function or, if provided therewith, being adapted for connecting to the remote equipment (3) in the absence of coverage by a cellular communication network, **characterized in that** for connecting the computer terminal (5) to the remote equipment (3), the following steps are implemented:
- the computer terminal (5) transmits an identifier to the remote equipment (3),
- the remote equipment (3) transmits an authentication request thereto,
- the computer terminal (5) transmits this request to the module for identifying a portable phone (4) to which said terminal is connected,
- upon this request, the module for identifying a portable phone (4) implements an authentication algorithm and returns a reply to the computer terminal (5), which is the result of the processing of this request by the authentication algorithm,
- the computer terminal (5) transmits this reply to the remote equipment (3),
- the remote equipment (3) compares the reply to an expected result, and continues the connection if the reply and the expected result match.

2. The method according to claim 1, **characterized in that** the remote equipment (3) receives from an authentication center of a cellular telephone network, for at least one given module for identifying a portable phone (4), on the one hand at least one random number to be transmitted in a request when the remote equipment (3) receives an identifier corresponding to this identification module, and on the other hand, an expected reply corresponding to the result of the processing this random number by an authentication algorithm to be implemented by said identification module.

3. The method according to any of the preceding claims, **characterized in that** the module for identifying the portable phone (4) transmits to the computer terminal (5) together with the reply a secrete session key to be used for encrypting the exchanges between said computer terminal (5) and the remote equipment (3).

4. The method according to claims 2 and 3 taken in combination, **characterized in that** the authentication center transmits to the remote equipment (3) together with the random number and the expected reply a secrete session key to be used for encrypting the exchanges between said computer terminal (5) and the remote equipment (3).

5. A terminal (5) designed for communicating with a remote equipment (3), with the terminal (5) lacking a mobile phone function or, if provided therewith, being adapted to connect to the remote equipment (3) in the absence of coverage by a cellular communication network, **characterized in that** it comprises means adapted for communicating on the one hand with the module for identifying a portable phone (4) to which said terminal (5) is connected, and on the other hand, with the remote equipment (3), as well as processing means handling the various exchanges by implementing the method according to any of the preceding claims.

6. The terminal (5) according to claim 5,
**characterized in that** the means for communicating with a module for identifying a portable phone (4) comprise means for transmitting the request to said module as a command of a protocol for exchanges with a modem.

7. A computer server (3) adapted for remote communication with a computer terminal (5) available to a user, with the terminal (5) lacking a mobile phone function or, if provided therewith, being adapted for connecting to the server (3) in the absence of coverage by a cellular communication network, **characterized in that** for implementing the connection to the computer terminal (5) to the server (3), said server comprises
- means for receiving an identifier from the computer terminal (5);
- means for transmitting to the computer terminal (5) an authentication request in reply to the identifier received, said computer terminal (5) transmitting this request to the module for identifying a portable phone (4), to which said terminal (5) is connected, with the module for identifying the portable phone (4) implementing upon this request an authentication algorithm and returning to the computer terminal (5) a reply, which is the result of the processing of this request by the authentication algorithm;
- means for receiving the reply, which is the result of the processing of the request by the authentication algorithm, from the computer terminal (5) ;
- means for comparing the reply received to an expected result.

8. An arrangement, **characterized in that** it comprises a computer server (3) according to claim 7, and a gateway enabling connection thereof to an authentication center (1) of a cellular phone network.

## Patentansprüche

1. Verfahren zum Absichern von Austauschvorgängen zwischen einem Computerendgerät (5) und einer Ferneinrichtung (3), wobei das Endgerät keine Mobilfunkfunktion hat, oder falls es damit ausgestattet ist, dazu geeignet ist, sich an die Ferneinrichtung (3) anzuschließen, wenn keine Abdeckung durch ein zellulares Kommunikationsnetzwerk vorhanden ist, **dadurch gekennzeichnet, dass** zum Anschließen des Computerendgeräts (5) an die Ferneinrichtung (3) die folgenden Schritte ausgeführt werden:
- das Computerendgerät (5) überträgt eine Kennzeichnung an die Ferneinrichtung (3),
- die Ferneinrichtung (3) überträgt ihm als Antwort eine Authentifizierungsanforderung,
- das Computerendgerät (5) überträgt diese Anforderung an das Identifizierungsmodul eines tragbaren Telefons (4), an welches das Endgerät angeschlossen ist,
- das Modul für die Identifizierung des tragbaren Telefons (4) führt auf diese Anforderung hin einen Authentifizierungsalgorithmus aus und sendet an das Computerendgerät (5) eine Antwort zurück, die das Ergebnis der Verarbeitung dieser Anforderung durch den Authentifizierungsalgorithmus ist,
- das Computerendgerät (5) überträgt diese Antwort an die Ferneinrichtung (3),
- die Ferneinrichtung (3) vergleicht die Antwort mit einem erwarteten Ergebnis und führt die Verbindung fort, wenn die Antwort und das erwartete Ergebnis übereinstimmen.

2. Verfahren nach Anspruch 1, **dadurch gekennzeichnet, dass** die Ferneinrichtung (3) von einer Authentifizierungszentrale eines zellularen Telefonnetzwerks für mindestens ein bestimmtes Modul zur Identifizierung des tragbaren Telefons (4) einerseits mindestens eine Zufallszahl empfängt, die dazu gedacht ist, in einer Anforderung übertragen zu werden, wenn die Ferneinrichtung (3) eine Kennzeichnung empfängt, die diesem Identifizierungsmodul entspricht, und andererseits eine erwartete Antwort empfängt, die dem Ergebnis der Verarbeitung dieser Zufallszahl durch einen Authentifizierungsalgorithmus entspricht, der dazu gedacht ist, von dem Identifizierungsmodul ausgeführt zu werden.

3. Verfahren nach einem der vorhergehenden Ansprüche, **dadurch gekennzeichnet, dass** das Modul zur Identifizierung des Telefons (4) dem Computerendgerät (5) gleichzeitig mit der Antwort einen geheimen Sitzungsschlüssel überträgt, der dazu gedacht ist, um die Austauschvorgänge zwischen dem Computerendgerät (5) und der Ferneinrichtung (3) zu verschlüsseln.

4. Verfahren nach Anspruch 2 und 3 zusammen gesehen, **dadurch gekennzeichnet, dass** die Authentifizierungszentrale der Ferneinrichtung (3) gleichzeitig mit der Zufallszahl und der erwarteten Antwort einen geheimen Sitzungsschlüssel überträgt, der dazu gedacht ist, zum Verschlüsseln der Austauschvorgänge zwischen dem Computerendgerät (5) und der Ferneinrichtung (3) verwendet zu werden.

5. Endgerät (5) zum Austausch mit einer Ferneinrichtung (3), wobei das Endgerät (5) keine Mobilfunkfunktion hat, oder falls es damit ausgestattet ist, dazu geeignet ist, sich an die Ferneinrichtung (3) anzuschließen, wenn keine Abdeckung durch ein zellulares Kommunikationsnetzwerk vorhanden ist, **dadurch gekennzeichnet, dass** es ferner Mittel, die dazu geeignet sind, um einerseits mit dem Modul zur Identifizierung eines tragbaren Telefons (4), an welches das Endgerät (5) angeschlossen ist, und andererseits mit der Ferneinrichtung (3) zu kommunizieren, sowie Verarbeitungsmittel, welche die diversen Austauschvorgänge handhaben, indem sie das Verfahren nach einem der vorhergehenden Ansprüche ausführen, umfasst.

6. Endgerät (5) nach Anspruch 5, **dadurch gekennzeichnet, dass** die Mittel zum Austausch mit einem Telefonidentifizierungsmodul (4) Mittel umfassen zum Übertragen der Anforderung an das Modul in Form eines Befehls eines Austauschprotokolls mit einem Modem.

7. Computerserver (3) zum Fernaustausch mit einem Computerendgerät (5), über das ein Benutzer verfügt, wobei das Endgerät (5) keine Mobilfunkfunktion hat, oder falls es damit ausgestattet ist, dazu geeignet ist, sich an den Server (3) anzuschließen, falls keine Abdeckung durch ein zellulares Kommunikationsnetzwerk vorhanden ist, **dadurch gekennzeichnet, dass** zum Durchführen des Anschlusses des Computerendgeräts (5) an den Server (3) der Server folgendes umfasst:
- Mittel zum Empfangen einer Kennzeichnung aus dem Computerendgerät (5);
- Mittel zum Übertragen an das Computerendgerät (5) einer Authentifizierungsanforderung als Antwort auf die empfangene Kennzeichnung, wobei das Computerendgerät (5) diese Anforderung an das Modul zur Identifizierung eines tragbaren Telefons (4) überträgt, an welches das Endgerät (5) angeschlossen ist, wobei das Modul zur Identifizierung des tragbaren Telefons (4) auf diese Anforderung hin einen Authentifizierungsalgorithmus ausführt und dem Computerendgerät (5) eine Antwort zurückschickt, die das Ergebnis der Verarbeitung dieser Anforderung durch den Authentifizierungsalgorithmus ist;
- Mittel zum Empfangen der Antwort, die das Ergebnis der Verarbeitung der Anforderung durch den Authentifizierungsalgorithmus ist, die aus dem Computerendgerät (5) stammt;
- Mittel zum Vergleichen der empfangenen Antwort mit einem erwarteten Ergebnis.

8. Anordnung, **dadurch gekennzeichnet, dass** sie einen Computerserver (3) nach Anspruch 7 und ein Gateway, das seinen Anschluss an die Authentifizierungszentrale (1) eines zellularen Telefonnetzwerks ermöglicht, umfasst.
